# EUROPEAN PATENT SPECIFICATION

(11) **EP 3 843 575 B1**
(45) Date of publication and mention of the grant of the patent: **23.11.2022**
(21) Application number: 19763138.5
(22) Date of filing: 19.08.2019
(51) Int. Cl.: A43B 3/00, A43B 5/04, A43B 13/18, A43B 23/07, B33Y 50/00, B33Y 80/00

(54) **CUSHIONING STRUCTURES**
DÄMPFUNGSSTRUKTUREN
STRUCTURES D'AMORTISSEMENT

(30) Priority: 31.08.2018 US 201862725722 P
(43) Date of publication of application: 07.07.2021
(73) Proprietor: Materialise NV, 3001 Leuven (BE)
(72) Inventor: VANDECRUYS, Dries, 3001 Leuven (BE); LAES, Philippe, 3001 Leuven (BE)
(74) Representative: Abel & Imray LLP
(86) International application number: PCT/US2019/047101
(87) International publication number: WO 2020/046618

(56) References cited:
- WO-A1-2018/237279
- US-A- 5 337 492
- US-A1- 2016 157 557
- US-A1- 2017 231 322

## Description

### BACKGROUND OF THE INVENTION

### Field of the Invention

The field of the invention is cushioning structures. In some examples, the cushioning structures may be manufactured using additive manufacturing.

United States patent application no. US-A-2017/231322 describes a sole structure for an article of footwear includes an impact-attenuation support member. The impact-attenuation support member includes a first impact-attenuation element and a second-impact-attenuation element. The first and second impact-attenuation elements include one or more portions that are interlinked and that are movable with respect to one another in at least one direction.

United States patent no. US5337492 describes a shoe bottom, in particular for sports shoes, having a plurality of individual flexurally resilient carrier elements which are directed transversely with respect to the longitudinal direction of the shoe and which are arranged at spacings one behind the other in the longitudinal direction of the shoe. The carrier elements are connected to a cover plate portion on the foot side and to an outsole layer on the outward side. Each carrier element is formed by a closed box profile with an upper web portion which extends transversely with respect to the longitudinal direction of the shoe, a lower web portion which is parallel to the upper web portion, two lateral support walls which connect the ends of the web portions together and bracing means supporting the upper web portion relative to the lower web portion.

United States patent application no. US-A-2016/157557 an article of footwear which may include a sole structure comprising an outer member and a plurality of ground engaging members, including a first ground engaging member. The ground engaging members extend substantially downward from the outer surface of a sole structure. Ground engaging members, or cleats, may be auxetic structures that can increase their dimensions in a direction that is orthogonal to the direction of applied force or tension. The ground engaging members may comprise a series of faces joined along hinge portions that allow ground engaging members to flatten and expand significantly. The first ground engaging member may have a substantially three-pointed starshaped pyramidal structure. The outer member may have a more elastic material than the material comprising the faces of ground engaging member. The outer member may have an inner surface with apertures that correspond with the ground engaging members of the outer surface.

### Description of the Related Technology

Cushioning structures may be used for a variety of different purposes. For example, cushioning structures may be used in footwear, including customized footwear. Such customized footwear may be manufactured using additive manufacturing technologies such as 3-D printing, for example. Examples of cushioning structures can include foam or other structures configured to bend or deform and absorb force and thereby provide a cushioning effect from the force.

Cushioning structures may be used, for example, in a liner of a ski boot. For example, European Patent Application No. EP3320796A1, describes a custom ski shoe that includes an inner shoe that has different zones constructed with different structures to provide different mechanical properties in each of the different zones. This can improve wearing comfort by choosing the appropriate structure for the appropriate zone based on the desired mechanical properties. Accordingly, EP3320796A1 describes generic structures such as generic honeycomb, bar, lattice, 3D lattice, trigonal, tetragonal, and cubic structures that can be used to provide different mechanical properties in different zones.

However, a disadvantage of existing cushioning structures is that they are not optimized for force absorption, such as for providing different levels of force absorption in different directions. Another disadvantage of existing cushioning structures, such as generic structures, is that they are not optimized for 3-D printing. For example, the scanning patterns (e.g., pattern in 2D over which energy is applied to build material for generating a layer of an object on a layer-by-layer basis) needed to generate the generic structures may be inefficient or complex, leading to excess energy consumption and a higher rate of build failure for 3-D printing.

### SUMMARY

A first aspect herein provides a cushioning structure comprising a plurality of unit cells formed in an array, each unit cell of the plurality of unit cells comprising one or more first walls parallel to a central plane and a first protruding structure that protrudes from the central plane, the first protruding structure forming a concave structure from a first side of the central plane and a convex structure from a second side of the central plane, the first protruding structure comprising one or more walls at a non-perpendicular angle to the central plane, wherein the array comprises a two dimensional array with the plurality of unit cells aligned in rows and columns, wherein the structure comprises a plurality of the two dimensional arrays formed as a stack.

A second aspect provides a computer-implemented method of designing an object with a cushioning structure. The method includes generating a first digital model corresponding to a negative of a cushioning structure according to the first aspect. The method further comprises superimposing the first digital model over a digital model of a solid structure corresponding to the object; performing a Boolean subtraction of the digital model of the solid structure from the first digital mode to generate a second digital model corresponding to a second negative structure having a shape corresponding to the solid structure; performing a second Boolean subtraction of the second digital model from the digital model of the solid structure to generate a digital model of the object comprising at least a portion of the structure; and manufacturing the object based on the digital model of the object using additive manufacturing.

### BRIEF DESCRIPTION OF THE DRAWINGS

Figure 1 illustrates an example of a computer environment suitable for the implementation of 3D object design and manufacturing.
Figure 2 illustrates an example functional block diagram of one example of a computer.
Figure 3 shows an example high level process for manufacturing a 3D object using the methods and systems disclosed herein.
Figure 4 is an example of a scanning system which may be used to manufacture a cushioning structure as described herein.
Figures 5A-5C show an example of a unit cell with angled walls that can be used to form a cushioning structure, according to certain examples which are not currently claimed.
Figures 5D-5F show another example of a unit cell with angled walls that can be used to form a cushioning structure, according to certain embodiments.
Figures 5G-5I show yet another example of a unit cell with angled walls that can be used to form a cushioning structure, according to certain embodiments.
Figures 5J-5L show yet another example of a unit cell with angled walls that can be used to form a cushioning structure, according to certain examples which are not currently claimed.
Figures 5M-5O show yet another example of a unit cell with angled walls that can be used to form a cushioning structure, according to certain examples which are not currently claimed.
Figures 6A-6H illustrate an example of a 2D cushioning structure formed of a plurality of unit cells of Figures 5A-5C, according to certain embodiments.
Figures 7A and 7B illustrate an example of a 3D cushioning structure formed as a stack of 2D cushioning structures of Figures 6A-6C, according to certain embodiments.
Figure 8 illustrates a view of an exterior structure of a shoe, according to certain embodiments.
Figure 9 illustrates one or more 2D or 3D cushioning structures inside a hollow shell of a shoe, according to certain embodiments.
Figures 10A-10C illustrate example see-through views of an example shoe in various positions, according to certain embodiments.
Figure 11 illustrates an example see-through view of an example shoe on the foot of a wearer, according to certain embodiments.
Figure 12 illustrates a flowchart of example operations for designing an object including cushioning structures, according to certain embodiments.
Figure 13 illustrates an example of a negative array superimposed over a solid structure representing a hollow shell, according to certain embodiments.
Figure 13A illustrates a close up view of a portion of a negative array, according to certain embodiments.

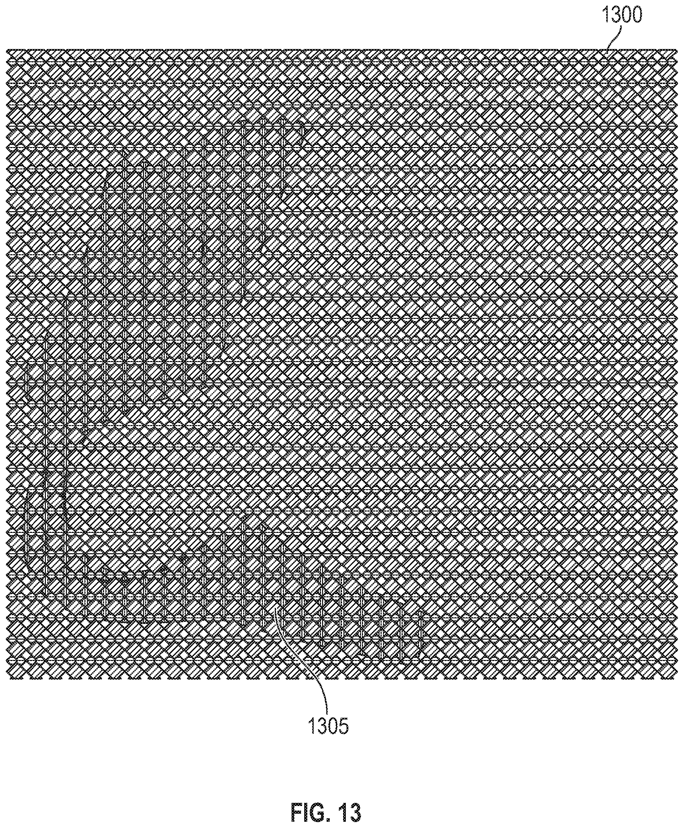

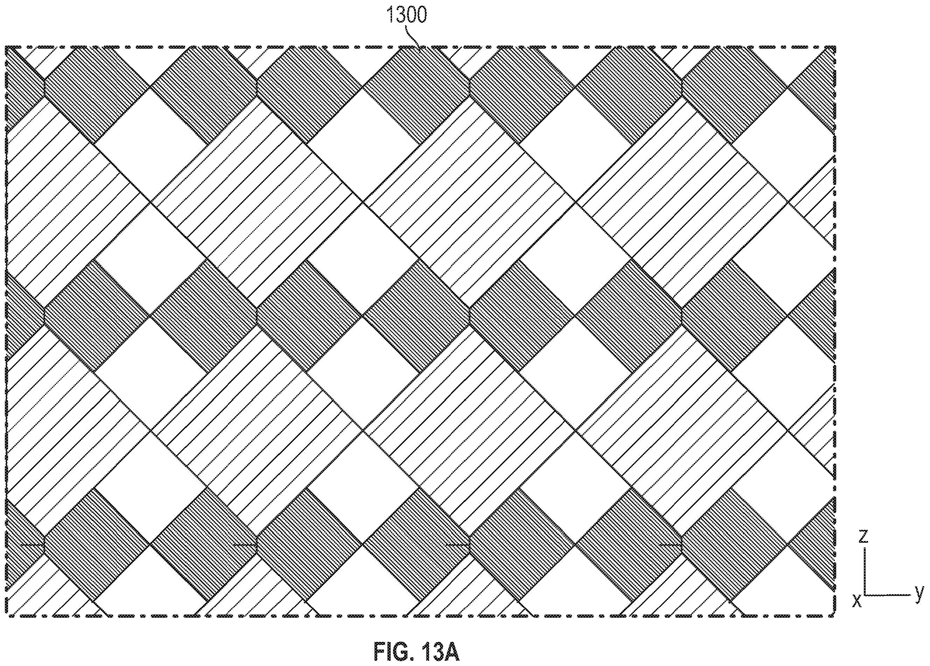

Figure 13 illustrates an example of a negative array superimposed over a solid structure representing a hollow shell, according to certain embodiments.
Figure 13A illustrates a close up view of a portion of a negative array, according to certain embodiments.

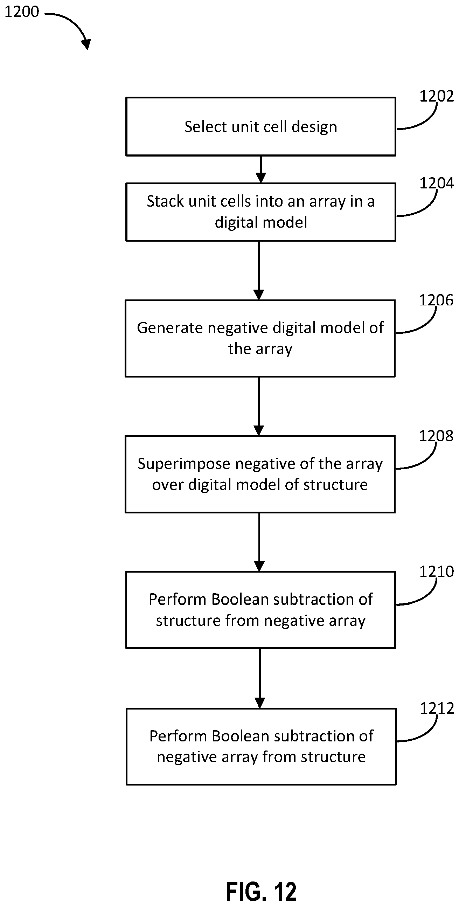

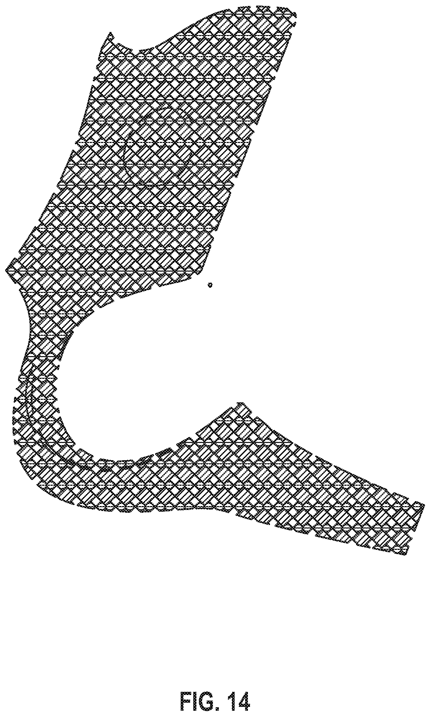

Figure 14 illustrates an example of a resulting object of the operations of Figure 12, according to certain embodiments.

### DETAILED DESCRIPTION OF CERTAIN INVENTIVE EMBODIMENTS

Embodiments of this disclosure relate to cushioning structures formed of a plurality of unit cells. A unit cell is referred to as a "unit" cell in that in certain embodiments it refers to an individual unit that is repeated in a pattern to form a cushioning structure. For example, a plurality of unit cells may be arranged in 3D space and coupled to one another (e.g., directly coupled to one another without additional structure between one another) to form a cushioning structure. In certain embodiments, the design of the unit cell includes angled walls, and allows for the plurality of unit cells to be stacked together to form an array (e.g., a 2D array, such as over an X-axis and Y-axis or a 3D array such as over an X, Y, and Z axis). Based on the angled walls and stackability, a cushioning structure based on the plurality of unit cells advantageously can provide an improved cushioning effect, such as a different cushioning effect based on the direction force is applied. Further, a cushioning structure based on the plurality of unit cells can advantageously be manufactured more efficiently using 3D printing techniques by allowing the use of long continuous vectors in a scanning pattern for 3D printing the cushioning structure. This reduces the chance of errors in the manufacturing of the cushioning structure, and can also reduce power consumption.

Certain embodiments are described herein with respect to footwear, such as a shoe or a ski boot liner, that utilizes one or more cushioning structures as discussed herein. However, it should be noted that the cushioning structures discussed herein may be used for a variety of other applications.

Further, certain embodiments of cushioning structures are described herein as being manufactured using additive manufacturing or 3D printing. However, it should be noted that other suitable manufacturing techniques could be used to manufacture such cushioning structures.

### Additive manufacturing systems

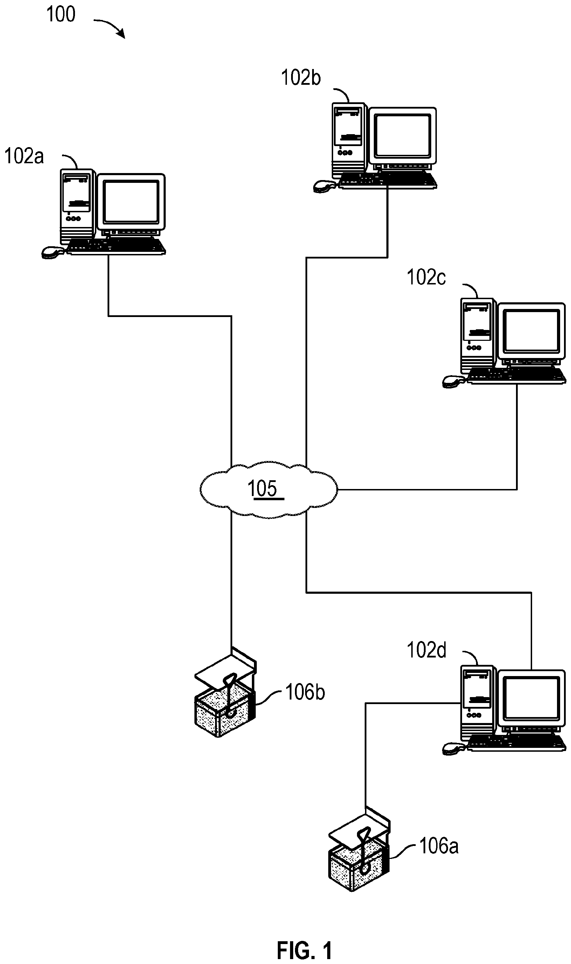

Embodiments of the invention may be practiced within a system for designing and manufacturing 3D objects. Turning to Figure 1, an example of a computer environment suitable for the implementation of 3D object design and manufacturing is shown. The environment includes a system 100. The system 100 includes one or more computers 102a-102d, which can be, for example, any workstation, server, or other computing device capable of processing information. In some aspects, each of the computers 102a-102d can be connected, by any suitable communications technology (e.g., an internet protocol), to a network 105 (e.g., the Internet). Accordingly, the computers 102a-102d may transmit and receive information (e.g., software, digital representations of 3-D objects, commands or instructions to operate an additive manufacturing device, etc.) between each other via the network 105.

The system 100 further includes one or more additive manufacturing devices or apparatuses (e.g., 3-D printers) 106a-106b. As shown the additive manufacturing device 106a is directly connected to a computer 102d (and through computer 102d connected to computers 102a-102c via the network 105) and additive manufacturing device 106b is connected to the computers 102a-102d via the network 105. Accordingly, one of skill in the art will understand that an additive manufacturing device 106 may be directly connected to a computer 102, connected to a computer 102 via a network 105, and/or connected to a computer 102 via another computer 102 and the network 105.

It should be noted that though the system 100 is described with respect to a network and one or more computers, the techniques described herein also apply to a single computer 102, which may be directly connected to an additive manufacturing device 106.

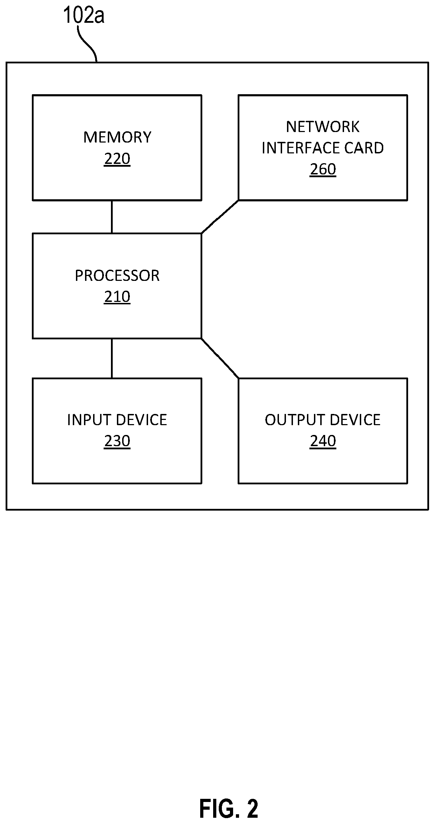

Figure 2 illustrates a functional block diagram of one example of a computer of Figure 1. The computer 102a includes a processor 210 in data communication with a memory 220, an input device 230, and an output device 240. In some embodiments, the processor is further in data communication with an optional network interface card 260. Although described separately, it is to be appreciated that functional blocks described with respect to the computer 102a need not be separate structural elements. For example, the processor 210 and memory 220 may be embodied in a single chip.

The processor 210 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 210 can be coupled, via one or more buses, to read information from or write information to memory 220. The processor may additionally, or in the alternative, contain memory, such as processor registers. The memory 220 can include processor cache, including a multi-level hierarchical cache in which different levels have different capacities and access speeds. The memory 220 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 also may be coupled to an input device 230 and an output device 240 for, respectively, receiving input from and providing output to a user of the computer 102a.

Suitable input devices include, but are not limited to, a keyboard, buttons, keys, switches, a pointing device, a mouse, a joystick, a remote control, an infrared detector, a bar code reader, a scanner, a video camera (possibly coupled with video processing software to, e.g., detect hand gestures or facial gestures), a motion detector, or a microphone (possibly coupled to audio processing software to, e.g., detect voice commands). Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 also decodes data received via a network according to one or more data transmission protocols. The network interface card 260 can include a transmitter, receiver, or both. In other embodiments, the transmitter and receiver can be two separate components. The network interface card 260, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

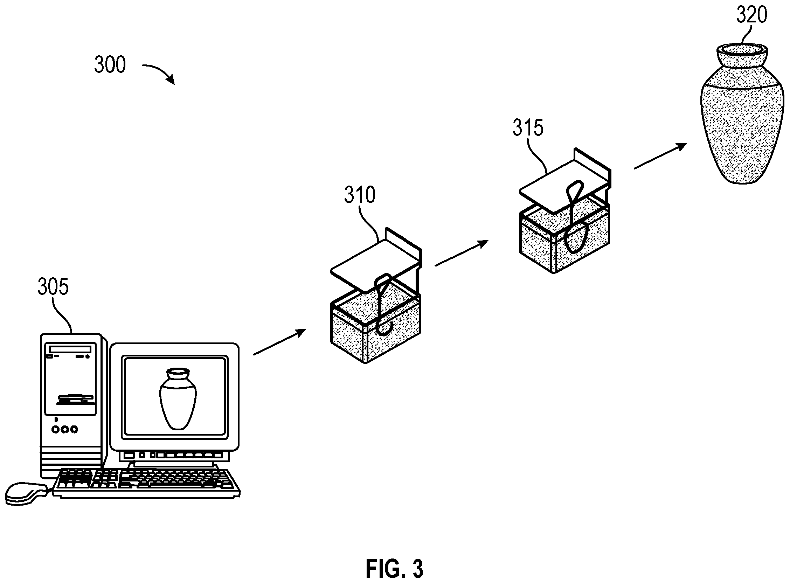

Figure 3 illustrates a process 300 for manufacturing a 3-D object or device, such as an object including one or more cushioning structures as discussed herein. As shown, at a step 305, a digital representation of the object is designed using a computer, such as the computer 102a. For example, 2-D or 3-D data may be input to the computer 102a for aiding in designing the digital representation of the 3-D object. Continuing at a step 310, information is sent from the computer 102a to an additive manufacturing device, such as additive manufacturing device 106, and the device 106 commences the manufacturing process in accordance with the received information. At a step 315, the additive manufacturing device 106 continues manufacturing the 3-D object using suitable materials, such as a liquid resin.

These suitable materials may include, but are not limited to a photopolymer resin, polyurethane, methyl methacrylate-acrylonitrile-butadiene-styrene copolymer, resorbable materials such as polymer-ceramic composites, etc. Examples of commercially available materials are: DSM Somos^{®} series of materials 7100, 8100, 9100, 9420, 10100, 11100, 12110, 14120 and 15100 from DSM Somos; ABSplus-P430, ABSi, ABS-ESD7, ABS-M30, ABS-M30i, PC-ABS, PC ISO, PC, ULTEM 9085, PPSF and PPSU materials from Stratasys; Accura Plastic, DuraForm, CastForm, Laserform and VisiJet line of materials from 3-Systems; the PA line of materials, PrimeCast and PrimePart materials and Alumide and CarbonMide from EOS GmbH. The VisiJet line of materials from 3-Systems may include Visijet Flex, Visijet Tough, Visijet Clear, Visijet HiTemp, Visijet e-stone, Visijet Black, Visijet Jewel, Visijet FTI, etc. Examples of other materials may include Objet materials, such as Objet Fullcure, Objet Veroclear, Objet Digital Materials, Objet Duruswhite, Objet Tangoblack, Objet Tangoplus, Objet Tangoblackplus, etc. Another example of materials may include materials from the Renshape 5000 and 7800 series. Further, at a step 320, the 3-D object is generated.

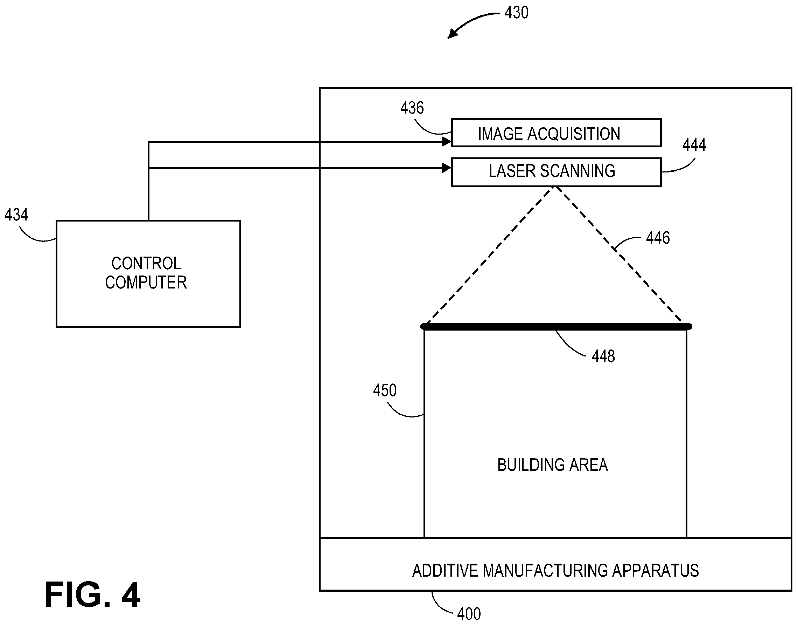

FIG. 4 illustrates an example additive manufacturing apparatus 400 for generating a three-dimensional (3-D) object. In this example, the additive manufacturing apparatus 400 is a laser sintering device. The laser sintering device 400 may be used to generate one or more 3D objects layer by layer. The laser sintering device 400, for example, may utilize a powder (e.g., metal, polymer, etc.), to build an object a layer at a time as part of a build process.

Successive powder layers are spread on top of each other using, for example, a recoating mechanism (e.g., a recoater blade, drum, or roller). The recoating mechanism deposits powder for a layer as it moves across the build area, for example in the direction shown, or in the opposite direction if the recoating mechanism is starting from the other side of the build area, such as for another layer of the build. After deposition, a computer-controlled CO2 laser beam scans the surface according to a scanning pattern and selectively binds together the powder particles of the corresponding cross section of the product. In some embodiments, the laser scanning device is an X-Y moveable infrared laser source. As such, the laser source can be moved along an X axis and along a Y axis in order to direct its beam to a specific location of the top most layer of powder according to the scanning pattern. Alternatively, in some embodiments, the laser scanning device may comprise a laser scanner which receives a laser beam from a stationary laser source, and deflects it over moveable mirrors to direct the beam to a specified location in the working area of the device according to the scanning pattern. During laser exposure, the powder temperature rises above the material (e.g., glass, polymer, metal) transition point after which adjacent particles flow together to create the 3D object. The device 400 may also optionally include a radiation heater (e.g., an infrared lamp) and/or atmosphere control device. The radiation heater may be used to preheat the powder between the recoating of a new powder layer and the scanning of that layer. In some embodiments, the radiation heater may be omitted. The atmosphere control device may be used throughout the process to avoid undesired scenarios such as, for example, powder oxidation.

The control computer 434 may be configured to control operations of the additive manufacturing apparatus 400. In some embodiments, the control computer may be one or more computers 102 from Figure 2 or the computer 305 from Figure 3. In some embodiments, the control computer 434 may be a controller built into or configured to interface with the additive manufacturing apparatus 400.

Various embodiments disclosed herein provide for the use of a computer control system. A skilled artisan will readily appreciate that these embodiments may be implemented using numerous different types of computing devices, including both general purpose and/or special purpose computing system environments or configurations.

Examples of well-known computing systems, environments, and/or configurations that may be suitable for use in connection with the embodiments set forth above may include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like. These devices may include stored instructions, which, when executed by a microprocessor in the computing device, cause the computer device to perform specified actions to carry out the instructions. As used herein, instructions refer to computer-implemented steps for processing information in the system. Instructions can be implemented in software, firmware or hardware and include any type of programmed step undertaken by components of the system.

A microprocessor may be any conventional general purpose single- or multi-chip microprocessor such as a Pentium^{®} processor, a Pentium^{®} Pro processor, a 8051 processor, a MIPS^{®} processor, a Power PC^{®} processor, or an Alpha^{®} processor. In addition, the microprocessor may be any conventional special purpose microprocessor such as a digital signal processor or a graphics processor. The microprocessor typically has conventional address lines, conventional data lines, and one or more conventional control lines.

Aspects and embodiments of the inventions disclosed herein may be implemented as a method, apparatus or article of manufacture using standard programming or engineering techniques to produce software, firmware, hardware, or any combination thereof. The term "article of manufacture" as used herein refers to code or logic implemented in hardware or nontransitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

The control computer 434 may be connected to a laser scanning device 444. The laser scanning device may include movable mirrors which can direct the laser beam received from a laser source into the building area. The laser source may also be a movable laser source, or it may also be the laser scanner provided in a stereolithography device 400. The control computer 434 may further include software which controls the movement and functionality of the laser scanning system 444 according to the scanning pattern. As such, the control computer 434 may be configured to control the moment and activation of the laser scanning device according to the scanning pattern.

The control computer 434 may further be configured to interface with an image acquisition assembly 436, such as to receive data/images from the image acquisition assembly 436. The control computer 434 may further be configured to process the data/images to determine if errors have or will occur in the build process as described herein. The control computer 434 may further be configured to control when and how the image acquisition assembly 436 captures images.

The image acquisition assembly 436 may be configured to attach to, be integrated with, and/or sit separate from the additive manufacturing apparatus 400 and placed in such a position to monitor the building area 450 and/or the build surface. Further, the image acquisition assembly 436 may be configured to be stationary, or moveable (such as based on control signals received from the control computer 434) to monitor the building area 450 from different angles.

The image acquisition assembly 436 may be configured to acquire images of a calibration plate 448 or a build surface. More particularly, the image acquisition assembly 436 may be configured to acquire images of laser spots and/or other markings made on the calibration plate 448 or build surface by the scanning system 444.

The image acquisition assembly 436 may include a camera, for example, an optical camera. The camera may be a commercial off-the-shelf ("COTS") digital camera having sufficient resolution to capture spots and other markings on the calibration plate 448 or build surface in sufficient detail to calibrate the scanning device. In some embodiments, the image acquisition assembly is selected from an optical camera, a thermal imaging device, an IR camera, or a sensor that transfers other signals to visual signals.

A camera may take the form of a special purpose camera which is configured to capture spots reflecting from the surface of the calibration plate. In order to capture spots on the calibration plate, it may be necessary to position the camera so that it points to the area near the spot created by a scanner in the scanning system 444. Accordingly, the image acquisition assembly 436 may also include a mount. In some embodiments, the mount may be a tilt-pan mount, which provides a range of motion sufficient to capture images in various locations on the calibration plate 448. The mount may be driven by a motor. The motor may be configured to receive control signals from the control computer 434 which provide instructions for the movement of the camera 436. In some embodiments, in addition to having a tilt-pan range of motion, the camera 436 may be further mounted on a projecting arm of a crane, commonly referred to as a jib. The jib may provide a further range of motion by allowing the camera not only to tilt and pan, but also to physically move its location in order to better acquire images of spots and/or markings on the calibration plate 448 or build surface.

### Cushioning Structure

As discussed, certain embodiments herein provide a cushioning structure formed of a plurality of unit cells. In certain aspects, the cushioning structure includes a single type of unit cell of a single size. Forming such cushioning structures from such symmetrical unit cells may provide certain advantages such as for the ability to create an ordered array of repeating cells with predictable openings. In certain aspects, the cushioning structure includes a single type of unit cell, but having different sizes at different locations or portions in the cushioning structure. However, such structures may not provide as much predictability of openings or repeatability. In certain aspects, the size of the cushioning structure is selected based on a desired property (e.g., deformability, aesthetic, ventilation, etc.) of the cushioning structure. In certain aspects, a material used for the cushioning structure is also based on a desired property of the cushioning structure.

In certain aspects, the cushioning structure is a one-piece structure. A one-piece cushioning structure may comprise individual unit cells that are formed as a uni-component structure that is undivided and/or indivisible, for example, a structure that cannot be separated into individual components except by breaking or destroying elements of the structure. For example, a one-piece cushioning structure may comprise locations or portions having different geometries or sizes, but the portions cannot be separated except by breaking the one-piece structure apart. For example, the portions may be continuous with one another. One-piece cushioning structures may comprise a single material, or one-piece cushioning structures may comprise more than one material, wherein the materials are joined or fused together to form the one-piece cushioning structure. In some embodiments, a one-piece cushioning structure may be built by additive manufacturing in a single build session. The one-piece cushioning structure itself may have a coating placed thereon or be attached or coupled to other structures/objects. The one-piece cushioning structure may further form a uni-component structure along with one or more other objects/structures, such as additional one-piece cushioning structures.

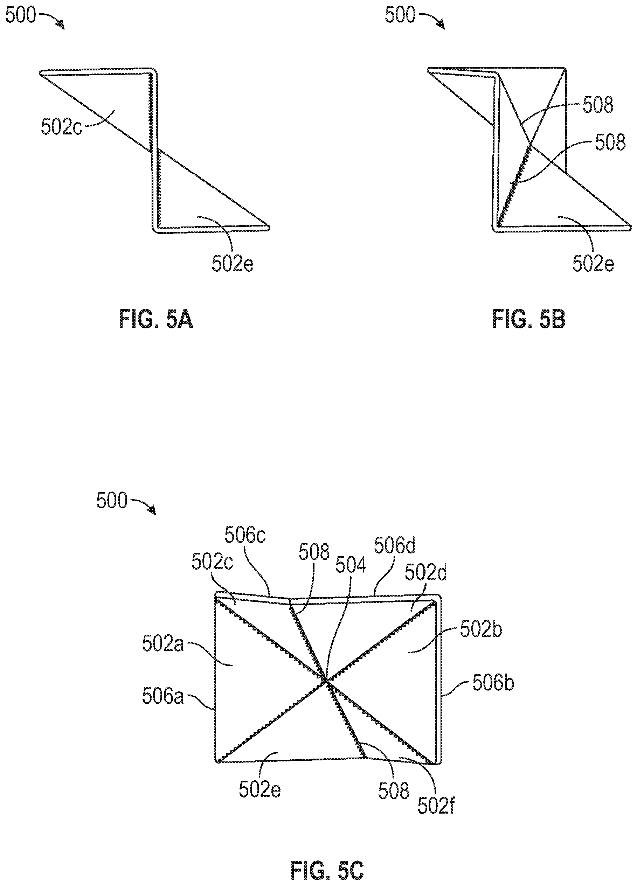

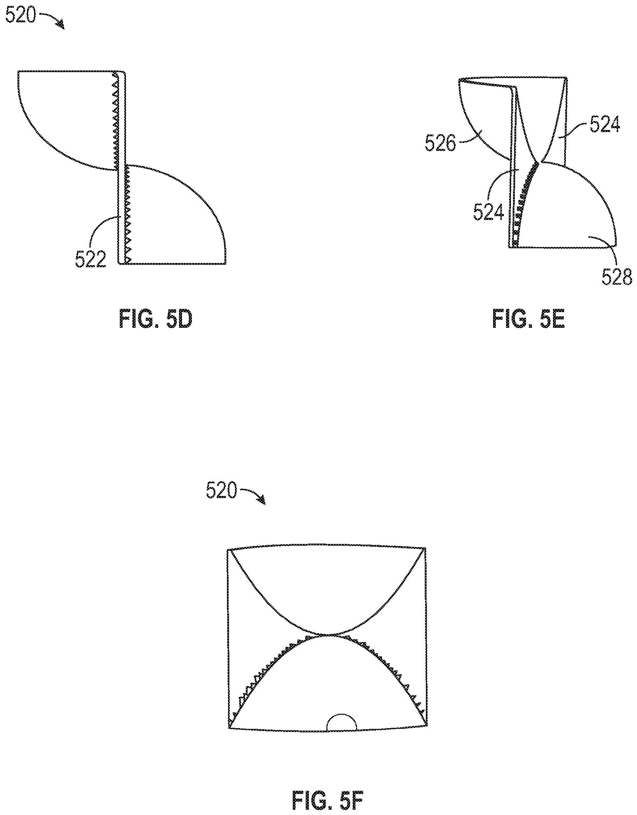

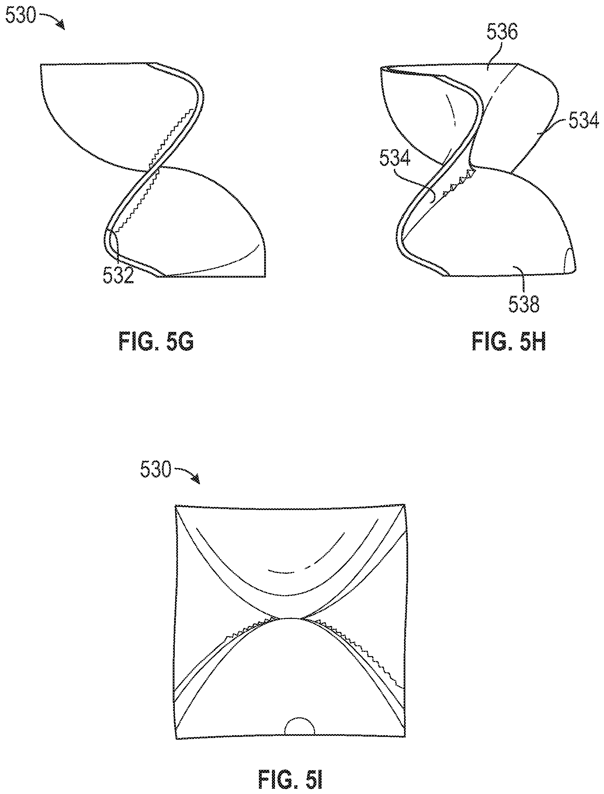

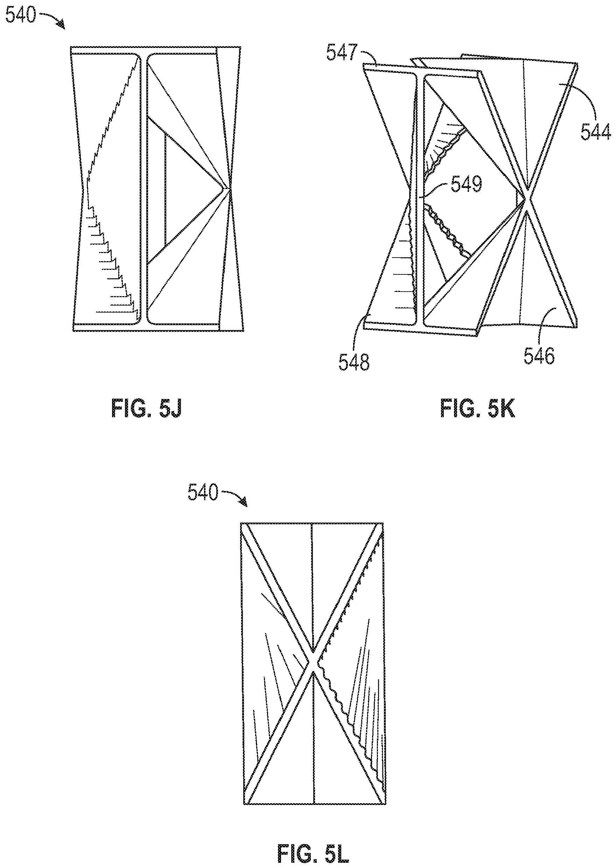

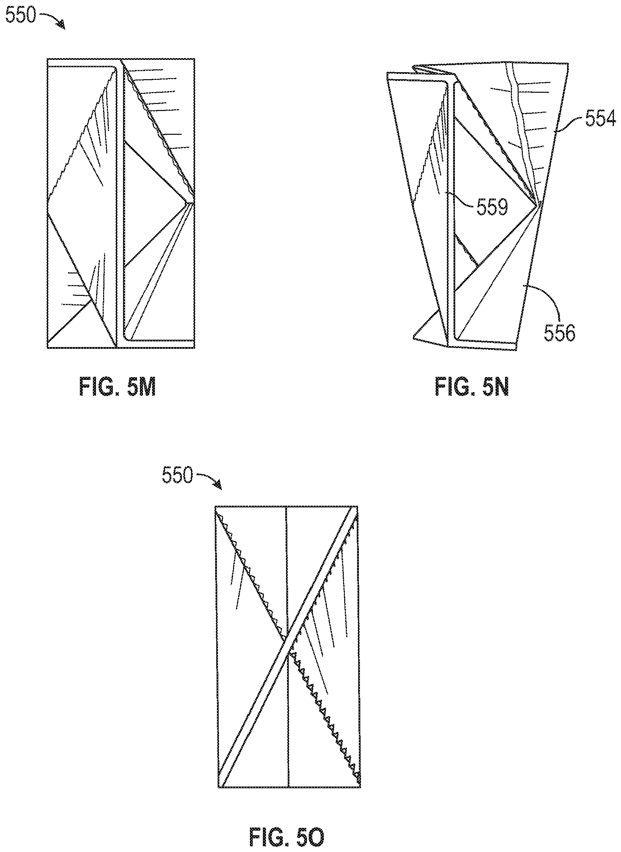

Figures 5A-5C show an example of a unit cell 500 with angled walls (e.g., faces) that can be used to form a cushioning structure, according to certain examples which are not currently claimed. Figure 5A shows a first view of the unit cell 500. Figure 5B shows a second view of the unit cell 500 that is rotated approximately 20 degrees clockwise along an axis running vertical from the view shown in Figure 5A. Figure 5C shows a third view of the unit cell 500 that is rotated approximately 90 degrees clockwise along an axis running vertical from the view shown in Figure 5A.

As shown, the unit cell 500 includes six triangular faces 502a-502f. In certain examples which are not currently claimed, the triangular faces 502a-502f have approximately the same size and shape as one another. Triangular faces 502a and 502b, as shown, are parallel to the same plane, and include surfaces that are within the same plane (also referred to as a central plane). As shown, the triangular faces 502a and 502b are connected at a node 504 that is central to unit cell 500. In certain examples which are not currently claimed, the triangular faces 502a and 502b include outer edges 506a and 506b, respectively, that are opposite node 504. In certain examples which are not currently claimed, outer edges 506a and 506b are parallel to one another.

Each of the triangular faces 502a and 502b further include two inner edges 508. In certain aspects, the two inner edges of 508 of triangular face 502a align with the two inner edges of 508 such that they form two contiguous lines formed approximately as an "X."

This paragraph relates to certain examples which are not currently claimed. Triangular faces 502c and 502d are also connected to node 504. In certain examples which are not currently claimed, the triangular faces 502c and 502d include outer edges 506c and 506d, respectively, that are opposite node 504. In certain examples which are not currently claimed, outer edges 506c and 506d form an approximately 90 degree angle to one another, for example in a plane perpendicular to the central plane including surfaces of triangular faces 502a and 502b. Outer edges 506c and 506d intersect at a node. Further, in certain examples which are not currently claimed, outer edge 506c is perpendicular to outer edge 506a, and outer edge 506d is perpendicular to outer edge 506b. Outer edge 506c intersects with outer edge 506a at a node, and outer edge 506d intersects with outer edge 506b at a node. One inner edge 508 of triangular face 502c is shared with one inner edge 508 of triangular face 502a. Further, one inner edge 508 of triangular face 502d is shared with one inner edge 508 of triangular face 502b. The remaining inner edge of each of triangular faces 502c and 502d is shared. As shown, the triangular face 502c and triangular face 502d are positioned with respect to the central plane including surfaces of triangular faces 502a and 502b such that they form a pyramid like structure (an example of a protruding structure) with respect to the central plane. The pyramid like structure is a convex structure from one side of the central plane, and a concave structure from the opposite side of the central plane.

This paragraph relates to certain examples which are not currently claimed. Triangular faces 502e and 502f are similar to triangular faces 502c and 502d. However, triangular faces 502e and 502f share different inner edges with triangular faces 502a and 502b, respectively, than triangular faces 502c and 502d. Further, triangular faces 502e and 502f form a pyramid like structure (an example of a protruding structure) that is convex on a side of the central plane that triangular face 502c and triangular face 502d form a concave structure, and that is concave on a side of the central plane that triangular face 502c and triangular face 502d form a convex structure.

As shown, the triangular faces 502a-502f of unit cell 500 form angled walls with respect to one another. Advantageously, the structure of unit cell 500 including its angled walls allows multiple unit cells 500 to be arranged into a cushioning structure. The angled walls of the unit cell 500 advantageously provide the ability for the unit cell 500 to bend to absorb forces, and can be configured in an array which forms a cushioning structure with openings that are not in a straight line and further add to the cushioning effect of the cushioning structure. In certain aspects, each of the walls/faces of the unit cell 500 have a substantially same thickness.

Though Figures 5A-5C show unit cells with angled walls having triangular faces, and pyramid like structures on either side of a central plane, and certain embodiments are described with respect to such unit cells with angled walls, unit cells with angled walls having other shaped faces, such as other geometric shapes, curved shapes, etc., may similarly be used with the embodiments set forth herein. A unit cell with angled walls in certain aspects comprises a unit cell with one or more protruding structures, one or more faces parallel to a central plane, and where at least one of the protruding structures comprises a wall that is at an angle to the central plane. In certain aspects, non-curved walls may be preferable to curved walls as faces as certain points on the curved walls may not be self-supporting during the additive manufacturing process in that they cannot be built without additional support structures to prevent deformation. In contrast, non-curved walls can be configured so that the whole plane comprising the non-curved wall is self-supporting. Further, though unit cell 500 is shown as having two protruding structures that protrude or jut from a central plane on two sides, a unit cell may only have one such protruding structure from one side of the unit cell, while the remainder of the unit cell can be the flat central plane. In certain aspects, wherein the unit cell includes two protruding structures, the protruding structures have a same shape. In certain aspects, the protruding structures have different shapes.

For example, Figures 5D-5F illustrate another example unit cell 520 having curved faces instead of triangular faces. As shown, the unit cell 520 includes a central plane 522 formed of two faces 524. The unit cell 520 further includes protruding structures 526 and 528, formed of curved faces, that protrude from opposite sides of central plane 522. A bottom edge and top edge of the unit cell 520 are perpendicular to the central plane 522. In another example, Figures 5G-5I illustrate an example unit cell 530 also having curved faces. As shown, the unit cell 530 includes a central plane 532 formed of two faces 534. As shown, the central plane 532 is formed at an angle other than being perpendicular to the bottom edge and top edge of the central plane 532. The unit cell 530 further includes protruding structures 536 and 538, formed of curved faces, that protrude from opposite sides of central plane 532, but at an angle other than perpendicular to the central plane 532.

A unit cell with angled wall may further comprise other configurations. For example, Figures 5J-5L illustrate another example unit cell 540. As shown, the unit cell does not include faces on a central plane. However, unit cell 540 comprises triangular faces, and protruding structures 544 and 546 that connect at a node. In certain aspects, protruding structures 544 and 546 are symmetrical across a plane that passes through the node. As shown, each of the protruding structures 544 and 546 is formed of four triangular faces. Each of the protruding structures 544 and 546 are further convex from the same side of the unit cell 540, and concave from an opposite side of the unit cell 540. Each of the protruding structures 544 and 546 comprises two edges that are shared with protruding structures 547 and 548, respectively. In certain aspects, protruding structures 547 and 548 are symmetrical across a plane that passes through a node where protruding structures 547 and 548 couple. As shown, protruding structures 547 and 548 form an X shape. A triangular face 549 is located on one side of the X shape.

This paragraph relates to certain examples which are not currently claimed. In another example which is not currently claimed, Figures 5M-5O illustrate another example unit cell 550. As shown, the unit cell does not include faces on a central plane. However, unit cell 550 comprises triangular faces, and protruding structures 554 and 556 that connect at a node. As shown, protruding structure 554 comprises four triangular faces, while protruding structure 556 comprises three triangular faces. Each of the protruding structures 554 and 556 are further convex from the same side of the unit cell 550, and concave from an opposite side of the unit cell 550. Each of the protruding structures 554 and 556 coupled to an additional structure 559 as shown.

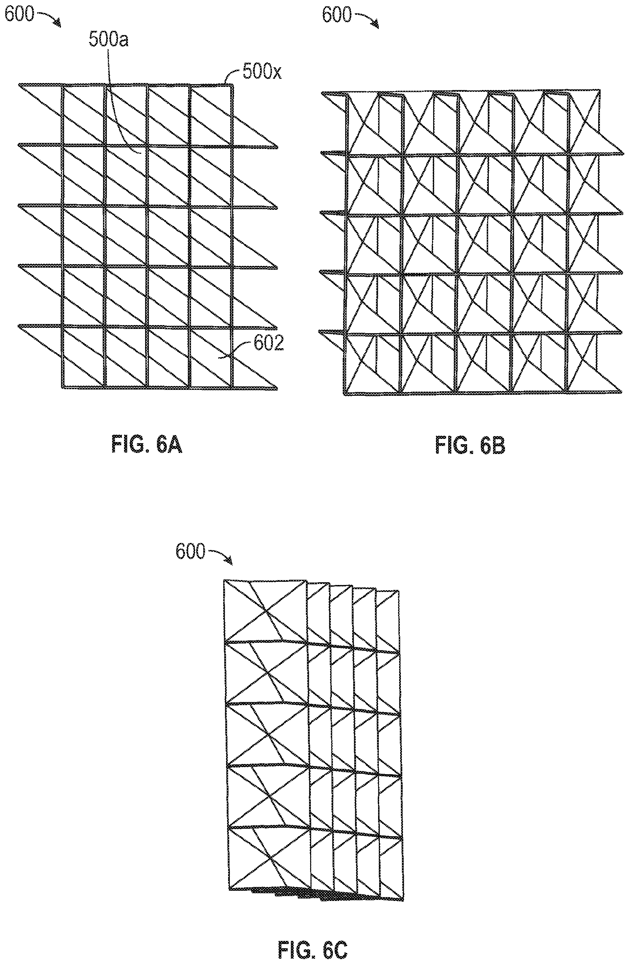

Figures 6A-6C illustrate an example of a cushioning structure 600 formed of a plurality of unit cells 500 rotated to varying degrees. In particular, cushioning structure 600 includes a plurality of unit cell 500 arrayed in two dimensions (e.g., aligned as rows and columns) and may be referred to as a 2D cushioning structure. As shown, all the unit cells 500 are oriented in the same direction in cushioning structure 600 and aligned. Orienting the one or more unit cells 500 in the same direction may provide enhanced cushioning effect. In other embodiments, one or more unit cells 500 of cushioning structure 600 may be oriented in different directions from one another.

As shown, unit cells 500 are coupled to adjacent unit cells at one or more nodes and/or or along one or more shared edges. For example, unit cell 500a is an interior unit cell 500 that is fully coupled at all side to additional unit cells 500. For example, unit cell 500a shares a node at the intersection of outer edges 502a and 502e with additional unit cells. Further, unit cell 500a shares a node at the intersection of outer edges 502b and 502f with additional unit cells. Unit cell 500a shares a node at the intersection of outer edges 502a and 502c with additional unit cells. Further, unit cell 500a shares a node at the intersection of outer edges 502b and 502d with additional unit cells. Unit cell 500a further shares its outer edge 502f with an additional unit cell. Unit cell 500a further shares its outer edge 502c with an additional unit cell. Therefore, in certain embodiments, four nodes and two edges of an interior unit cell 500 are shared with other unit cells in a 2D cushioning structure.

Some unit cells, such as unit cell 500x, may be exterior unit cells 500 that are not fully coupled at all sides to additional unit cells 500, and therefore may have fewer nodes and/or edges shared with additional unit cells 500 than unit cell 500a.

As shown, the unit cells 500 of cushioning structure 600 form perforations or openings 602. The openings 602, in some embodiments, are shaped as parallelograms when the cushioning structure 600 is in an undeformed state, such as when an external force is not applied to cushioning structure 600. In certain aspects, the openings 602 provide fluid movement (e.g., air movement) through the cushioning structure 600, such as for ventilation.

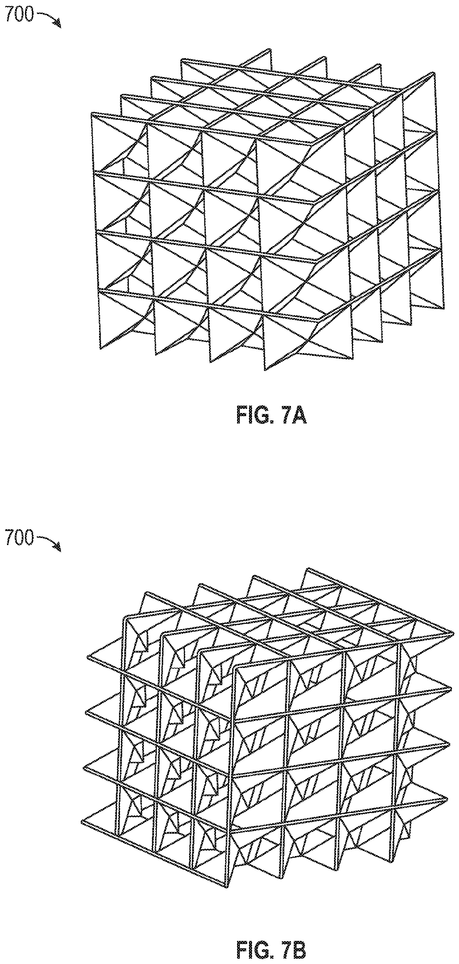

In certain embodiments, each unit cell 500 in cushioning structure 600 may be characterized as forming at least one inlet opening and at least one outlet opening. In certain embodiments the angled walls of a unit cell 500 may be curved, instead of straight as shown. In certain aspects, a 3D cushioning structure may be formed by stacking or layering 2D cushioning structures together. For example, Figures 7A and 7B illustrate 3D cushioning structure 700 formed as a stack of cushioning structures 600.

For example, a first plurality of unit cells 500 may be arrayed in a 2D cushioning structure 600 in an x-y plane, and then a second plurality of unit cells 500 may be arrayed in a second 2D cushioning structure 600 in a different x-y plane stacked upon the first plurality of unit cells to form 3D cushioning structure 700. In certain embodiments, each unit cell 500 in a first 2D cushioning structure 600 may have the same orientation as all other unit cells in the first 2D cushioning structure 600. In a second 2D cushioning structure 600, each unit cell may also have the same orientation as all other unit cells in the second 2D cushioning structure 600, but may have a different orientation from the unit cells in the first 2D cushioning structure 600.

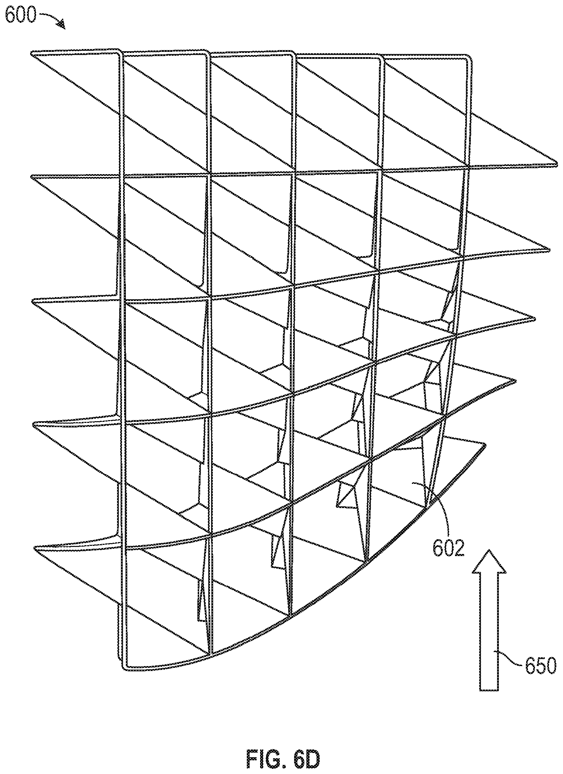

In certain aspects, when force is applied to 2D cushioning structure 600 (e.g., and similarly cushioning structure 700), the cushioning structure 600 deforms, thereby providing a cushioning effect. For example, as shown in Figure 6D, a force can be applied in the direction of arrow 650 to the cushioning structure 600 aligned as shown in Figure 6A, thereby deforming the cushioning structure 600 to resemble, for example, the cushioning structure 600 as shown in Figure 6D. As shown, the deformation causes the openings 602 to deform from the previous parallelogram like shape. The force direction of arrow 650 may be considered as a force applied parallel to the openings 602 of the cushioning structure 600, and the cushioning structure 600 provides a significant cushioning effect from force in such a direction due to the shape and design of cushioning structure 600.

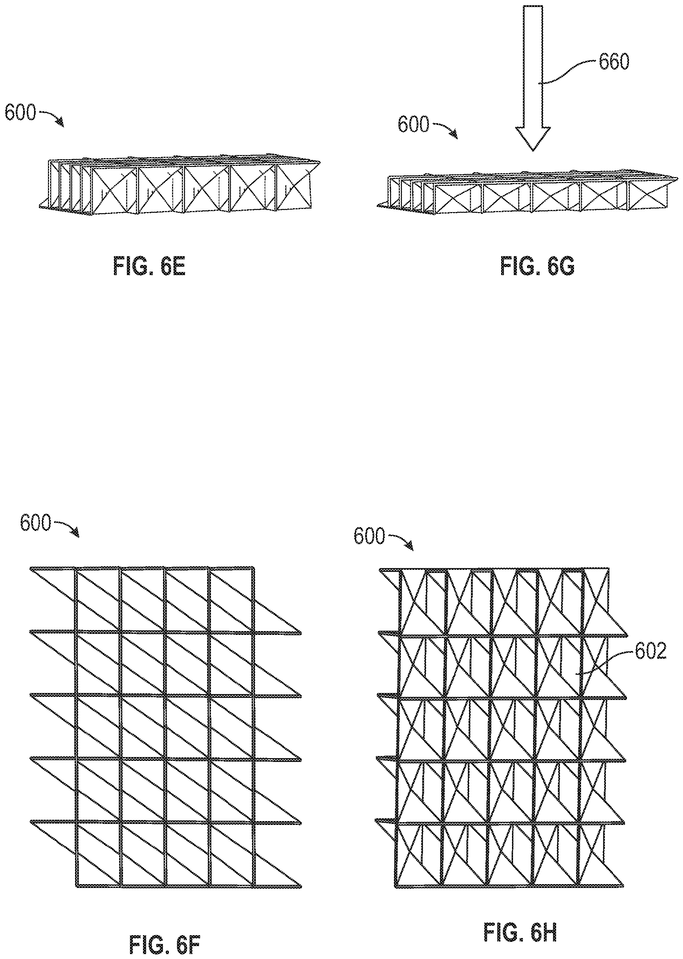

Figures 6E-6H further shows a force applied to cushioning structure 600 in the direction of arrow 660 at an angle considered as perpendicular to the openings 602 of the cushioning structure 600. As shown, the force causes the cushioning structure 600 to compress from the structure shown in Figures 6E and 6F to the structure shown in Figures 6G and 6H, but the cushioning structure 600 does not bend and deform the openings 602 like shown in Figure 6D. Accordingly, the cushioning structure 600 may provide less of a cushioning effect for force in the direction of arrow 660 than for in the direction of arrow 650. For example, the deformation may be limited by the walls of the unit cells 500 which are parallel to the direction of the force. Accordingly, in certain aspects, the cushioning structure can be oriented in an object so that the openings 602 are parallel to the direction in which the most cushioning effect is desired.

In certain embodiments, objects may include one or more 2D or 3D cushioning structures as discussed herein. The one or more 2D or 3D cushioning structures may be separable from the rest of the object. The one or more 2D or 3D cushioning structures may be formed as a one-piece structure as part of the object. A one-piece structure may comprise individual parts (e.g., such as the one or more 2D or 3D cushioning structures) that are fastened together, for example, by fastening means such as screws, bolts, or adhesives. A one-piece structure may comprise parts added to an existing structure. Alternatively, a one-piece structure may comprise a uni-component structure that is undivided and/or indivisible, for example, a structure that cannot be separated into individual components except by breaking or destroying elements of the structure. One-piece structures may comprise a single material, or one-piece structures may comprise more than one material, wherein the materials are joined or fused together to form the one-piece structure. In some embodiments, a one-piece structure may be built by additive manufacturing in a single build session.

In certain embodiments, where the object includes multiple 2D or 3D cushioning structures, the different 2D or 3D cushioning structures may be referred to as different zones of the object. Zones may be located adjacent to one another or may be stacked in layers. A zone may comprise an array of the same unit cells in the same orientation. In certain aspects, different zones may have the same unit cells in the same orientation, size, and/or shape. In certain aspects, different zones may have different unit cells in different orientations, sizes, and/or shapes.

### Footwear

As discussed, one type of object that can include one or more 2D or 3D cushioning structures as discussed herein comprises footwear, such as a shoe or a ski boot liner. For example, a footwear can include a hollow shell and the one or more 2D or 3D cushioning structures inside the hollow shell. In certain embodiments, different zones of the footwear include different 2D or 3D cushioning structures having different orientation, size, and/or shape to accommodate different cushioning or support requirements for footwear corresponding to the locations of the zones.

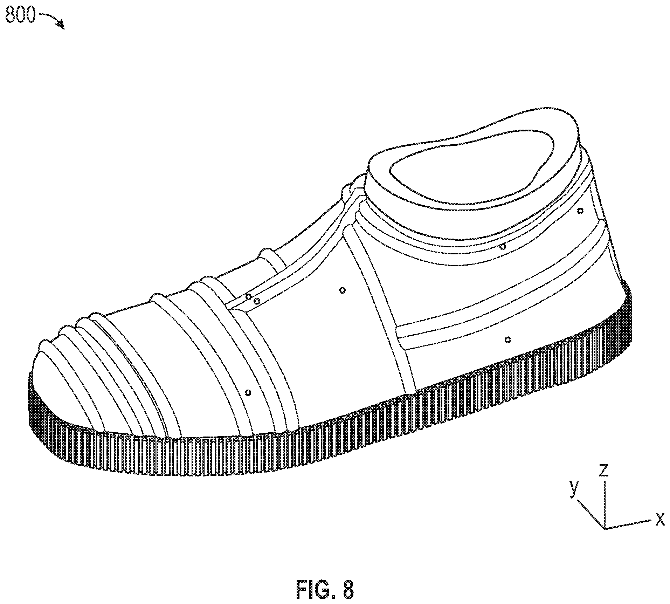

For example, Figure 8illustrates a view of an exterior structure of a shoe. In particular, in Figure 8 the hollow shell 800 of the shoe is visible, but not the one or more 2D or 3D cushioning structures inside the hollow shell 800. The shoe includes a plurality of zones (not shown) in hollow shell 800. As discussed, each of the different zones may have different cushioning or support requirements.

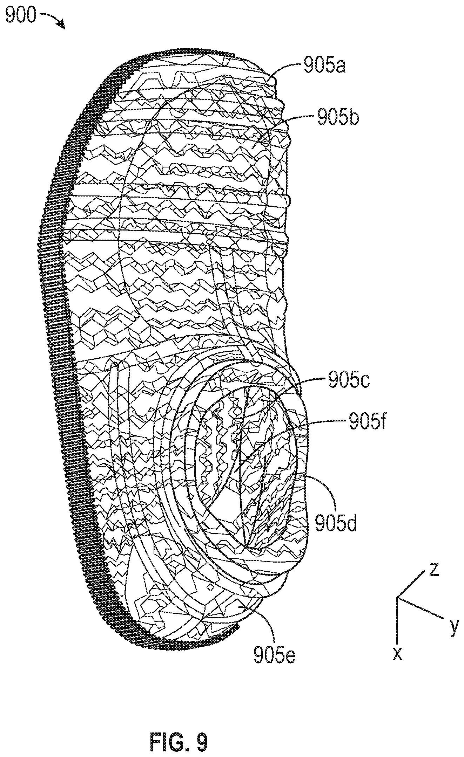

Figure 9 illustrates one or more 2D or 3D cushioning structures 900 inside the hollow shell 800. For example, Figure 9 illustrates the one or more 2D or 3D cushioning structures 900 in a similar orientation as a top view of hollow shell 800. As shown, the one or more 2D or 3D cushioning structures 900 correspond to different zones 905a-905f of the shoe of Figure 8. In certain embodiments, the one or more 2D or 3D cushioning structures 900 have a different shape, size, and/or orientation at different zones 905a-905f.

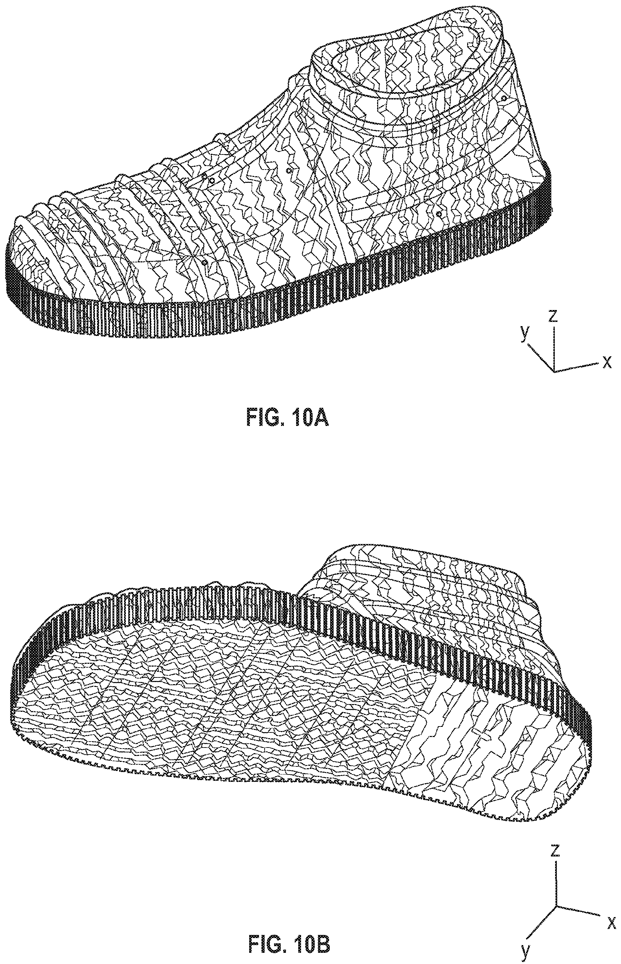

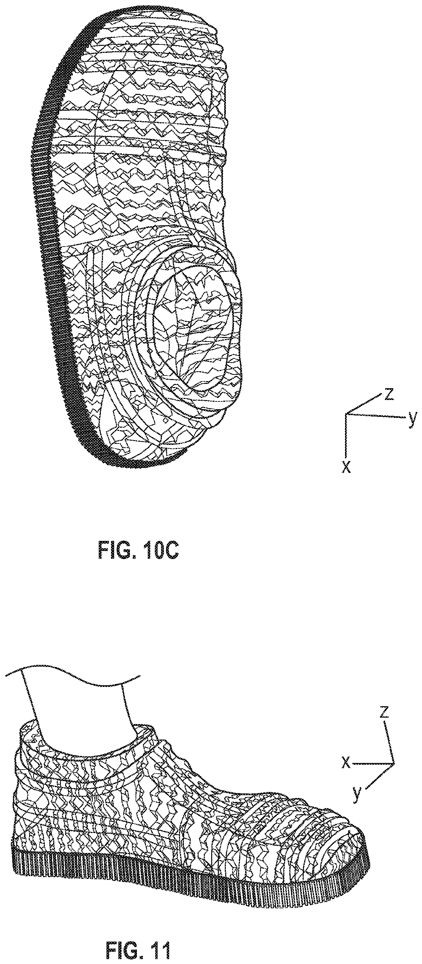

Figures 10A-10C illustrate example see-through views of an example shoe in various positions. Figure 11 illustrates an example see-through view of an example shoe on the foot of a wearer, according to certain embodiments.

In certain embodiments, the one or more 2D or 3D cushioning structures are positioned/oriented in the hollow shell to provide cushioning effect in the desired orientation. For example, in certain embodiments, the openings formed by unit cells of the 2D or 3D cushioning structures are oriented perpendicular to the corresponding surface of the hollow shell so as to provide cushioning effect in the direction of a user's foot when placed in the footwear.

### Object Design Method for Including Cushioning Structures

Certain embodiments herein provide a method of designing an object with one or more 2D or 3D cushioning structures. Figure 12 illustrates a flowchart of example operations 1200 for designing an object to include cushioning structures.

At block 1202, a unit cell (e.g., size, orientation, shape, etc.) design is selected. For example, a unit cell of the design of unit cell 500 is selected. In certain embodiments, the design is selected from a library of designs on a computing device (e.g., automatically or by a user of the computing device) such as computing device 102.

At block 1204, the unit cells are stacked into an array in a digital model, such as to form a 2D or 3D cushioning structure as a digital model. In certain embodiments, the unit cells are stacked in an array by a computing device (e.g., automatically) such as computing device 102.

Further, at block 1206, a negative of the array in the digital model is generated as a negative digital model of the array. The negative digital model may be generated so as to include structure/material wherever there was no material corresponding to the array, and not include structure/material wherever there was material corresponding to the array. In certain embodiments, the negative of the array in the digital model is generated by a computing device (e.g., automatically) such as computing device 102.

Continuing, at block 1208, the negative of the array in the digital model is superimposed over a digital model of a solid structure corresponding to the object to be filled with cushioning structure instead of the solid structure (e.g., the hollow portion of a shell of a ski boot liner wherein the hollow portion is represented as a solid model instead of hollow). In certain embodiments, the negative of the array is aligned with the solid structure so that the expected forces on the resulting object are properly aligned. Figure 13 illustrates an example of a negative array 1300 superimposed over one of the zones 1305 (e.g., similar to a zone 905) of a solid structure representing a hollow shell of a ski boot liner. Figure 13A illustrates a close up view of a portion of the negative array 1300. In certain embodiments, the negative of the array in the digital model is superimposed over a digital model of the solid structure to be filled by a computing device (e.g., automatically) such as computing device 102.

Further, at block 1210, a Boolean subtraction of the digital model of the solid structure from the negative array is performed to remove any non-overlapping areas of the negative array with respect to the solid structure. The result is a negative array having a shape corresponding to the solid structure and superimposed over the solid structure.

Continuing, at block 1212, a second Boolean subtraction of the negative array having a shape corresponding to the solid structure from the solid structure is performed. The result is the object with the cushioning structure. Figure 14 illustrates an example of the resulting object with the cushioning structure.

The operations 1200 allow for a computationally less complex method to generate a design of an object with one or more 2D or 3D cushioning structures. Accordingly, operations 1200 reduce the computational complexity and processing power of a computing device to design an object with one or more 2D or 3D cushioning structures.

### Scanning Method for Cushioning Structures

A further aspect of the present disclosure relates to a method for manufacturing a cushioning structure according to the embodiments herein. In some embodiments, the method may comprise receiving, in a computing device, a digital model of the cushioning structure.

The method may further comprise the steps of scanning the layers of the cushioning structure. The layers of the cushioning structure may be oriented so that a scanning pattern used for the layers includes long continuous vectors for scanning that do not require turning on and off of the laser/scanning device during scanning of different locations, thereby more efficiently generating the cushioning structure. For example, the shape of cushioning structures 600 and 700 may be conducive to using long continuous vectors.

For example, scanning may comprise building cross-sectional layers of the cushioning structure by moving an extruder containing build material or by applying either an energy source or chemicals to a build material along a scan pattern. Scan patterns may comprise at least one of a contour, hatch, outline, corner, fill, jump, or other feature of the cross-sectional layer built by AM. In some embodiments, scan patterns may vary in at least one of the number of hatch lines, the space between hatch lines, the shape of the overall scan pattern, and more. In some embodiments, the scan patterns comprise long continuous vectors.

Every cross section in the cushioning structure may vary in scan pattern and orientation from the cross sections immediately underlying and overlying it. Alternatively, in some embodiments, every two or more adjacent cross sections may have the same scan pattern and orientation as each other, while the next cross section in the z direction (either immediately underlying or overlying) has a different scan pattern and orientation. Two or more cross sections may form a stack of cross sections, so that variation arises between stacks but not between individual cross sections.

Any combination of cross sections or stacks of cross sections may be configured in either a random or non-random pattern in which the combination of different scan patterns and different orientations collectively lead to in a variation in openings.

In the cross sections of the cushioning structure, variation in scan patterns between cross sections may comprise variation in length of lines, number of lines, spacing between lines, thickness of lines, pattern in a cross section, geometric shapes traced by scan patterns, orientation, and/or more.

## Claims

1. A cushioning structure (600) comprising:
a plurality of unit cells (500) formed in an array, each unit cell of the plurality of unit cells comprising one or more first walls parallel to a central plane and a first protruding structure that protrudes from the central plane, the first protruding structure forming a concave structure from a first side of the central plane and a convex structure from a second side of the central plane, the first protruding structure comprising one or more walls at a non-perpendicular angle to the central plane, wherein the array comprises a two dimensional array with the plurality of unit cells aligned in rows and columns, wherein the structure comprises a plurality of the two dimensional arrays formed as a stack.

2. The cushioning structure of claim 1, wherein each of the plurality of cells are oriented in the same direction in the array.

3. The cushioning structure of claim 1, wherein a first unit cell of the plurality of unit cells shares only a first edge with a second unit cell of the plurality of unit cells.

4. The cushioning structure of claim 3, wherein the first unit cell shares only a second edge with a third unit cell of the plurality of unit cells.

5. The cushioning structure of claim 4, wherein the first unit cell shares only a first node with each of a fourth unit cell and fifth unit cell of the plurality of unit cells.

6. The cushioning structure of claim 5, wherein the first unit cell shares only a second node with each of a sixth unit cell and seventh unit cell of the plurality of unit cells.

7. The cushioning structure of claim 1, wherein each unit cell of the plurality of unit cells further comprises a second protruding structure that protrudes from the central plane, the second protruding structure forming a concave structure from the second side of the central plane and a convex structure from the first side of the central plane.

8. The cushioning structure of claim 1, wherein the one or more first walls comprise two triangular faces, and wherein the first protruding structure comprises two triangular faces.

9. A computer-implemented method of designing an object with a cushioning structure (600), the method comprising:
generating a first digital model corresponding to a negative of a cushioning structure according to any of the preceding claims;
superimposing the first digital model over a digital model of a solid structure corresponding to the object;
performing a Boolean subtraction of the digital model of the solid structure from the first digital mode to generate a second digital model corresponding to a second negative structure having a shape corresponding to the solid structure;
performing a second Boolean subtraction of the second digital model from the digital model of the solid structure to generate a digital model of the object comprising at least a portion of the cushioning structure; and
manufacturing the object based on the digital model of the object using additive manufacturing.

10. The method of claim 9, wherein each of the plurality of cells are oriented in the same direction in the array.

11. The method of claim 9, wherein a first unit cell of the plurality of unit cells shares only a first edge with a second unit cell of the plurality of unit cells.

12. The method of claim 9, wherein the object comprises at least a portion of a footwear.

13. The method of claim 12, wherein the footwear comprises a ski boot liner.

## Patentansprüche

1. Dämpfungsstruktur (600) mit:
einer Mehrzahl von Einheitszellen (500), die in einer Matrix ausgebildet sind, von denen jede Einheitszelle der Mehrzahl von Einheitszellen eine oder mehr erste Wände parallel zu einer zentralen Ebene und eine erste vorstehende Struktur, die von der zentralen Ebene vorsteht, die eine konkave Struktur von einer ersten Seite der zentralen Ebene und eine konvexe Struktur von einer zweiten Seite der zentralen Ebene ausbildet, die eine oder mehr Wände in einem nicht senkrechten Winkel zu der zentralen Ebene aufweist, aufweist, bei der die Matrix eine zweidimensionale Matrix mit der Mehrzahl von Einheitszellen, die in Reihen und Spalten ausgerichtet sind, aufweist, bei der die Struktur eine Mehrzahl der zweidimensionalen Matrizen, die als ein Stapel ausgebildet sind, aufweist.

2. Dämpfungsstruktur nach Anspruch 1, bei der jede der Mehrzahl von Zellen in der Matrix in derselben Richtung orientiert ist.

3. Dämpfungsstruktur nach Anspruch 1, bei der sich eine erste Einheitszelle der Mehrzahl von Einheitszellen lediglich eine erste Kante mit einer zweiten Einheitszelle der Mehrzahl von Einheitszellen teilt.

4. Dämpfungsstruktur nach Anspruch 3, bei der sich die erste Einheitszelle lediglich eine zweite Kante mit einer dritten Einheitszelle der Mehrzahl von Einheitszellen teilt.

5. Dämpfungsstruktur nach Anspruch 4, bei der sich die erste Einheitszelle lediglich einen ersten Knoten mit jeder von einer vierten Einheitszelle und einer fünften Einheitszelle der Mehrzahl von Einheitszellen teilt.

6. Dämpfungsstruktur nach Anspruch 5, bei der sich die erste Einheitszelle lediglich einen zweiten Knoten mit jeder von einer sechsten Einheitszelle und einer siebten Einheitszelle der Mehrzahl von Einheitszellen teilt.

7. Dämpfungsstruktur nach Anspruch 1, bei der jede Einheitszelle der Mehrzahl von Einheitszellen ferner eine zweite vorstehende Struktur aufweist, die von der zentralen Ebene vorsteht, die eine konkave Struktur von der zweiten Seite der zentralen Ebene und eine konvexe Struktur von der ersten Seite der zentralen Ebene ausbildet.

8. Dämpfungsstruktur nach Anspruch 1, bei der die eine oder mehr ersten Wände zwei dreieckige Flächen aufweisen, und bei der die erste vorstehende Struktur zwei dreieckige Flächen aufweist.

9. Computerimplementiertes Verfahren zum Gestalten eines Objekts mit einer Dämpfungsstruktur (600), mit:
Erzeugen eines ersten digitalen Modells, das einem Negativ einer Dämpfungsstruktur gemäß einem der vorhergehenden Ansprüche entspricht;
Überlagern des ersten digitalen Modells über ein digitales Modell einer festen Struktur, die dem Objekt entspricht;
Durchführen einer booleschen Subtraktion des digitalen Modells der festen Struktur von dem ersten digitalen Modell zum Erzeugen eines zweiten digitalen Modells, das einer zweiten negativen Struktur entspricht, die eine Form, die der festen Struktur entspricht, aufweist;
Durchführen einer zweiten booleschen Subtraktion des zweiten digitalen Modells von dem digitalen Modell der festen Struktur zum Erzeugen eines digitalen Modells des Objekts, das mindestens einen Teil der Dämpfungsstruktur aufweist; und
Herstellen des Objekts basierend auf dem digitalen Modell des Objekts unter Verwendung additiver Herstellung.

10. Verfahren nach Anspruch 9, bei dem jede der Mehrzahl von Zellen in der Matrix in derselben Richtung orientiert ist.

11. Verfahren nach Anspruch 9, bei dem sich eine erste Einheitszelle der Mehrzahl von Einheitszellen lediglich eine erste Kante mit einer zweiten Einheitszelle der Mehrzahl von Einheitszellen teilt.

12. Verfahren nach Anspruch 9, bei dem das Objekt zumindest einen Teil einer Fußbekleidung umfasst.

13. Verfahren nach Anspruch 12, bei dem die Fußbekleidung eine Skischuheinlage umfasst.

## Revendications

1. Structure d'amortissement (600) comprenant :
une pluralité de cellules unitaires (500) formées en réseau, chaque cellule unitaire de la pluralité de cellules unitaires comprenant une ou plusieurs premières parois parallèles à un plan central et une première structure protubérante qui fait saillie à partir du plan central, la première structure protubérante formant une structure concave à partir d'un premier côté du plan central et une structure convexe à partir d'un second côté du plan central, la première structure protubérante comprenant une ou plusieurs parois à un angle non perpendiculaire par rapport au plan central, dans laquelle le réseau comprend un réseau bidimensionnel avec la pluralité de cellules unitaires alignées en lignes et en colonnes, dans laquelle la structure comprend une pluralité de réseaux bidimensionnels empilés.

2. Structure d'amortissement selon la revendication 1, dans laquelle chacune de la pluralité de cellules est orientée dans la même direction dans le réseau.

3. Structure d'amortissement selon la revendication 1, dans laquelle une première cellule unitaire de la pluralité de cellules unitaires partage seulement un premier bord avec une deuxième cellule unitaire de la pluralité de cellules unitaires.

4. Structure d'amortissement selon la revendication 3, dans laquelle la première cellule unitaire partage seulement un second bord avec une troisième cellule unitaire de la pluralité de cellules unitaires.

5. Structure d'amortissement selon la revendication 4, dans laquelle la première cellule unitaire partage seulement un premier nœud avec chacune d'une quatrième cellule unitaire et d'une cinquième cellule unitaire de la pluralité de cellules unitaires.

6. Structure d'amortissement selon la revendication 5, dans laquelle la première cellule unitaire partage seulement un second nœud avec chacune d'une sixième cellule unitaire et d'une septième cellule unitaire de la pluralité de cellules unitaires.

7. Structure d'amortissement selon la revendication 1, dans laquelle chaque cellule unitaire de la pluralité de cellules unitaires comprend en outre une seconde structure protubérante qui fait saillie à partir du plan central, la seconde structure protubérante formant une structure concave à partir du second côté du plan central et une structure convexe à partir du premier côté du plan central.

8. Structure d'amortissement selon la revendication 1, dans laquelle la ou les premières parois comprennent deux faces triangulaires, et dans laquelle la première structure protubérante comprend deux faces triangulaires.

9. Procédé implémenté par ordinateur de conception d'un objet qui présente une structure d'amortissement (600), le procédé comprenant les étapes suivantes :
générer un premier modèle numérique correspondant à un négatif d'une structure d'amortissement selon l'une quelconque des revendications précédentes ;
superposer le premier modèle numérique sur un modèle numérique d'une structure solide correspondant à l'objet ;
exécuter une soustraction booléenne du modèle numérique de la structure solide du premier mode numérique afin de générer un second modèle numérique correspondant à une seconde structure négative qui présente une forme correspondant à la structure solide ;
exécuter une seconde soustraction booléenne du second modèle numérique du modèle numérique de la structure solide afin de générer un modèle numérique de l'objet comprenant une partie au moins de la structure d'amortissement ; et
fabriquer l'objet sur la base du modèle numérique de l'objet en utilisant une fabrication additive.

10. Procédé selon la revendication 9, dans lequel chacune de la pluralité de cellules est orientée dans la même direction dans le réseau.

11. Procédé selon la revendication 9, dans lequel une première cellule unitaire de la pluralité de cellules unitaires partage seulement un premier bord avec une deuxième cellule unitaire de la pluralité de cellules unitaires.

12. Procédé selon la revendication 9, dans lequel l'objet comprend au moins une partie de chaussures.

13. Procédé selon la revendication 12, dans lequel les chaussures comprennent un revêtement de chaussure de ski.
